# EUROPÄISCHE PATENTANMELDUNG

(11) **EP 0 908 345 A2**
(43) Veröffentlichungstag der Anmeldung: **14.04.1999**
(21) Anmeldenummer: 98116629.1
(22) Anmeldetag: 02.09.1998
(51) Int. Cl.: B60K 13/04, F01N 7/18

(54) **Aufhängung für eine Abgasanlage eines Kraftfahrzeugs**

(30) Priorität: 16.09.1997 DE 19740663
(71) Anmelder: Diehl Remscheid GmbH & Co., D-42857 Remscheid (DE)
(72) Erfinder: Hausmann, Hubert, 53894 Mechernich (DE); Pepping, Karl-Heinz, 53937 Gemünd (DE); Poten, Peter, 53947 Nettersheim (DE)
(74) Vertreter: Hofmann, Gerhard, Dipl.-Ing. Patentassessor

(57) **Zusammenfassung**

Durch Wärmedehnung einer Abgasanlage eines Kfz verschiebt sich der Aufhängepunkt des Endtopfes um einen bestimmten Betrag. Durch die Trennung von horizontaler und vertikaler Bewegung liegt eine Aufhängung (2) vor, bei der unabhängig vom Maß der Längung der Abgasanlage eine definierte weiche Kennlinie im Arbeitspunkt zur optimalen Entkopplung der Abgasanlage vom Kraftfahrzeug in vertikaler Richtung vorliegt. Gleichzeitig liegt eine progressive Kennlinie mit Endanschlag im Zug- und Druckbereich in vertikaler Richtung vor. Erreicht wird dies durch einen geschlossenen Rohrabschnitt (20) mit innenliegendem, spielfreien Gelenk (15, 26) sowie einer, mittig zwischen zwei Schubfedern (22, 23) liegenden Hülse (21). Die Hülse (21) dient zur Befestigung des Endtopfes (1). Das spielfreie Gelenk (15, 26) verbindet die Aufhängeöse (2) über eine Montageblech (10) mit dem Kraftfahrzeug.

## Beschreibung

Die Erfindung bezieht sich auf eine Aufhängung für eine Abgasanlage eines Kraftfahrzeugs nach dem Oberbegriff des Anspruchs 1.

Aus der DE 42 11 397 C1 ist eine Aufhängung für eine Abgasanlage eines Kraftfahrzeugs bekannt. An einer Grundplatte ist ein Haltebügel, bestehend aus einem elastischen Metallband, befestigt. Innerhalb des Haltebügels ist eine Aufnahmehülse zur Befestigung an einer Abgasanlage durch mehrere gummielastische Stege gehalten. Diese Stege sind sowohl mit der Grundplatte als auch mit dem Haltebügel verbunden. Nachteilig ist, daß die horizontalen und vertikalen Längenänderungen im gleichen Lagerelement, nämlich den gummielastischen Stegen, aufzunehmen sind. Diese Beanspruchung kann zu vorzeitigem Ausfall der gummielastischen Stege führen.

Eine elastisch verformbare Aufhängung für eine Abgasanlage eines Kraftfahrzeuges mit zwei Aufhängepunkten ist aus der DE 37 37 987 C2 bekannt. In einem rhombusähnlichen Schlaufenkörper aus einem Elastomerwerkstoff sind zwei Buchsen und eine, aus einer Fadenschlinge bestehende Einlage eingebettet. Die Fadenschlinge besteht aus elastisch dehnfähigem Material. Aufgrund der Überlagerung der Kennlinien des Schlaufenkörpers und der Fadenschlinge ergibt sich ab einem bestimmten Bereich bis zur maximalen Begrenzung der Auffederung eine sehr steile Kennlinie. Bei einer Auffederung unter Berücksichtigung der Längenänderung der Abgasanlage wird die Federwirkung der Aufhängung steifer.

Der Erfindung liegt die Aufgabe zugrunde, eine Aufhängung für eine der Längenänderung unterliegende Auspuffanlage vorzuschlagen, bei der sowohl in Ausgangsposition als auch in Endposition der Auspuffanlage eine weiche, unveränderte Kennlinie in vertikaler Richtung erreicht wird.

Die Erfindung löst diese Aufgabe entsprechend den kennzeichnenden Merkmalen des Anspruchs 1.
Vorteilhafte Weiterbildungen der Erfindung sind den Unteransprüchen zu entnehmen.

Durch die Trennung von horizontaler und vertikaler Bewegung liegt eine Aufhängung vor, bei der unabhängig vom Maß der Längung der Abgasanlage eine definierte weiche Kennlinie im Arbeitspunkt zur optimalen Entkopplung der Abgasanlage vom Kraftfahrzeug in vertikaler Richtung vorliegt. Gleichzeitig liegt eine progressive Kennlinie mit Endanschlag im Zug- und Druckbereich in vertikaler Richtung vor.

Ausführungsbeispiele der Erfindung sind in der Zeichnung dargestellt. Es zeigt
- Fig. 1.: einen Endtopf mit Aufhängung in einer Ansicht von unten,
- Fig. 2.: den Endtopf in einer Rückansicht,
- Fig. 3: eine Aufhängung im Schnitt in einer mittleren Position,
- Fig. 4: die Aufhängung nach Fig. 3 im Teilschnitt IV - IV,
- Fig. 5: die Aufhängung nach Fig. 3 bei maximaler Längung der Auspuffanlage in einer Endposition,
- Fig. 6: eine weitere Aufhängung,
- Fig. 7: die Aufhängung in einer Schnittdarstellung gemäß der Schnittlinie VII - VII nach Fig. 6 und
- Fig. 8: ein Federdiagramm der Aufhängung nach Fig. 3.

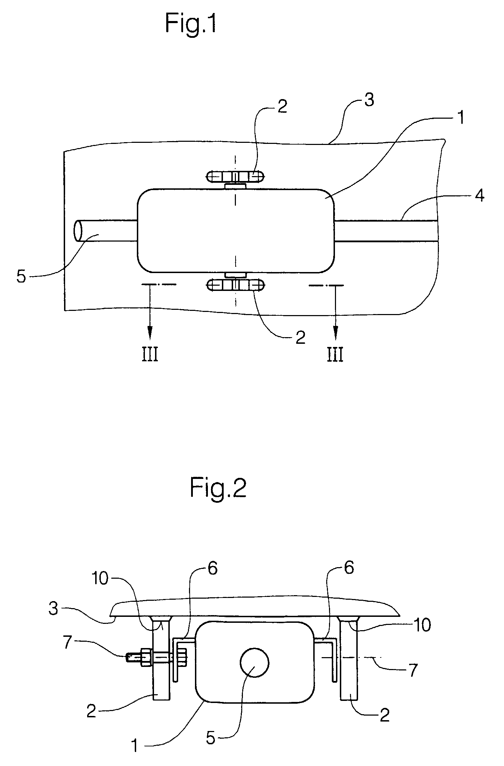

Nach Fig. 1 ist ein Endtopf 1 einer nicht weiter gezeigten Auspuffanlage mittels zweier Aufhängungen 2 an der Unterseite eines Kraftfahrzeugsbodens 3 befestigt. In den Endtopf 1 mündet eine Abgasleitung 4, wobei gegenüberliegend ein Endrohr 5 vorgesehen ist.

Entsprechend Fig. 2 weist der Endtopf 1 Befestigungswinkel 6 auf, die über Schraubverbindungen 7 mit den Aufhängungen 2 verbunden sind. Die Aufhängungen 2 sind ihrerseits in bekannter Weise mit dem Boden 3 verbunden.

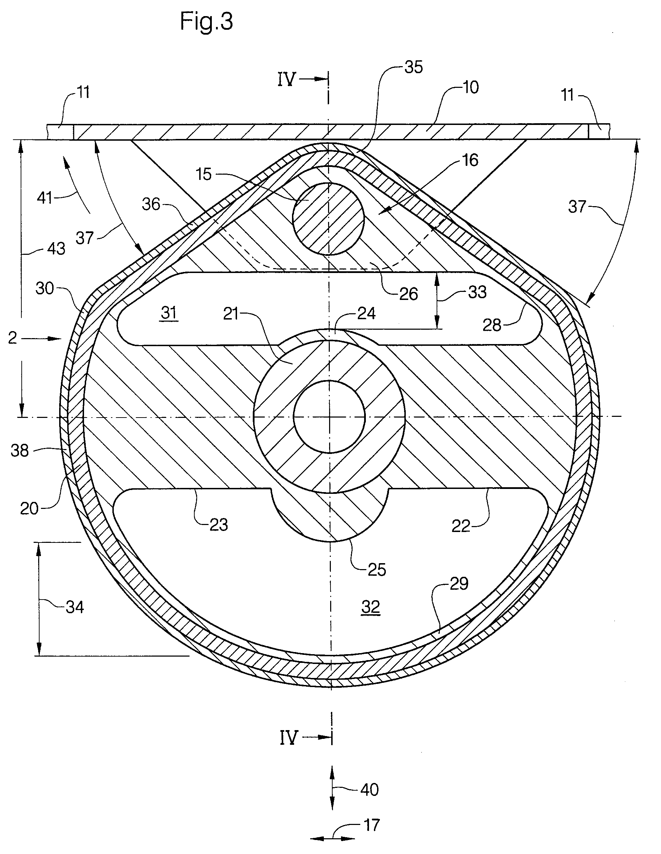

Entsprechend den Fig. 3 bis 5 besitzt ein U-förmiges Montageblech 10 mit Befestigungsschlitzen 11 abgestufte Bohrungen 12, 13 für einen, bei 14 verstemmten Lagerbolzen 15 aus Stahl. Dieser Lagerbolzen 15 trägt die Aufhängung 2.

Die Aufhängung 2 besteht aus einem Rohrabschnitt 20 aus Stahl, einer Hülse 21 ebenfalls aus Stahl oder Aluminium, Schubfedern 22, 23 mit einstückigen Anschlagnocken 24, 25, einem giebelförmigen Lagerkörper 26 sowie innen- und außenseitigen elastischen Schichten 28 bis 30. Die Schubfedern 22, 23 mit den Anschlagnocken 24, 25, der Lagerkörper 26 und die elastischen Schichten 28 - 30 bestehen aus einem Elastomer und sind durch Vulkanisation mit dem Rohrabschnitt 20 und der Hülse 21 verbunden. Beidseitig zu den Schubfedern 22, 23 liegen Hohlräume 31, 32 mit Federwegen 33, 34. Das Profil des Rohrabschnitts 20 besteht aus einem Kreisabschnitt 38 mit gerundetem Giebel 36.

Der Lagerbolzen 15 bildet ein spielfreies Gelenk 16, mit dem Lagerkörper 26, wodurch über die ganze Lebensdauer der Aufhängung 2 Klappergeräusche vermieden werden.

Der Rohrabschnitt 20 ist in Richtung auf das Montageblech 10 mit einem bei 35 gerundeten Giebel 36 versehen, sodaß Schwenkbewegungen um den Lagerbolzen 15 bis zum Anschlag an dem Montageblech 10 entsprechend den beidseitigen Winkeln 37 von 35° möglich sind.

Bei Überbeanspruchungen in Richtung des Doppelpfeiles 40 sorgen die Anschlagpuffer 24, 25 für eine progressive Kennung bis zum Anschlag an den Lagerkörper 26 bzw. bis zum Anschlag an die Schicht 29.

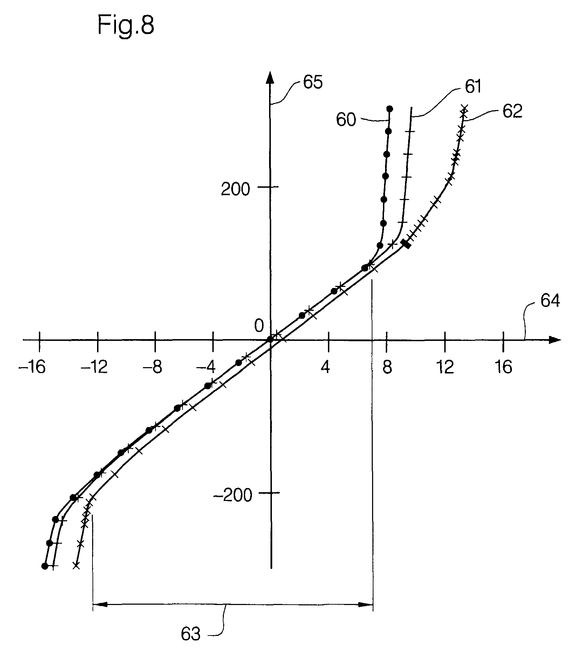

Die drei Kennlinien 60 bis 62 des Federdiagramms nach Fig. 8 verlaufen im Arbeitsbereich 63 mit gleicher Steifigkeit. Hierbei sind auf der Abszisse 64 die Verschiebung der Hülse 21 in mm in Längsrichtung 17 und auf der Ordinate 65 die Kraft in Newton (N) angegeben.

Der Durchgang durch den Nullpunkt verläuft bei

| Kennlinie | Auslenkung [mm] | bei [mm] |
|---|---|---|
| 60 | 0 | 0 |
| 61 | 7,5 | 0 |
| 62 | 15,0 | etwa 1 |

Lediglich der progressive Endanschlag im oberen Bereich ist unterschiedlich, da der Bolzen 15 einen härteren Anschlag bei der Auslenkung 0, Kennlinie 60 erzeugt als bei den Auslenkungen 7,5mm und 15,0mm, siehe die Kennlinien 61 und 62.

Der Durchgang durch den Nullpunkt bzw'. die Abszisse 64 verläuft bei den Kennlinien 60 und 61 bei 0, also Auslenkung 0mm und bei einer positiven bzw. negativen Auslenkung von 15mm, siehe Kennlinie 62 bei nur 1 mm. Das bedeutet also, daß bei einer maximalen Auslenkung von 15mm sich der Aufhängepunkt nur um 1mm nach oben bzw. nach unten verlagert. Wesentlich ist bei den erfindungsgemäßen Aufhängungen 2 und 50, daß trotz unterschiedlicher Auslenkungen im Arbeitsbereich 63 die Aufhängungen 2 und 50 gleiche Steifigkeiten aufweisen. Dies ist zur dynamischen Auslegung des Auspuffsystems besonders wichtig.

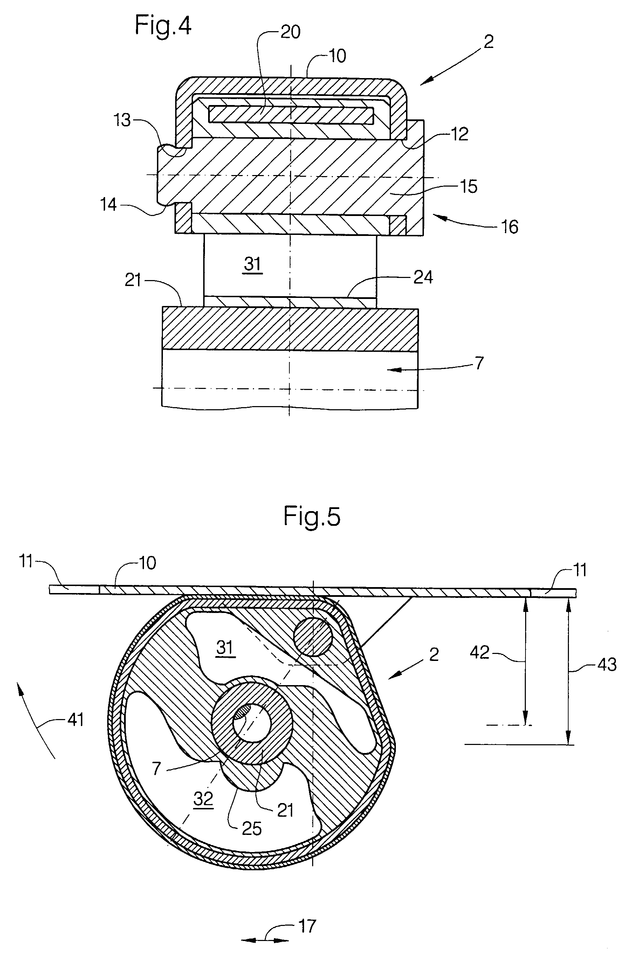

Bei maximaler Längung der nicht gezeigten Auspuffanlage in Längsrichtung 17 schwenkt die Aufhängeöse 2 entsprechend Fig. 3 um den Lagerbolzen 15 in Richtung des Pfeiles 41 bis zum Anschlag an dem Montageblech 10. Die Hülse 21 verlagert sich entsprechend. Sie bleibt jedoch, wie auch der Anschlagnocken 25 durch die Schraubverbindungen 7 am Endtopf 1 in vertikaler Ausrichtung. Auch eine drehbare Verbindung wäre technisch sinnvoll und möglich. Damit bleibt der Endtopf 1 in einer horizontalen Lage. Durch die vertikale Ausrichtung der Hülse und die Verwindung der Arme 22, 23 verlagert sich der Aufhängepunkt, nämlich die Schraubverbindung 7 (Fig. 5) entsprechend dem Abstand 4 nahezu unwesentlich zur Ausgangslage 43. Der Abstand gemäß der Mittellage nach Fig. 3 ist mit 43 bezeichnet.

Auf Schlechtwegstrecken werden die progressiven Abschnitte der Kennlinien 60 - 62 ausgenutzt. Diesbezüglich haben die unterschiedlichen Anschlagsysteme keinen wesentlichen Einfluß auf den Fahrkomfort.

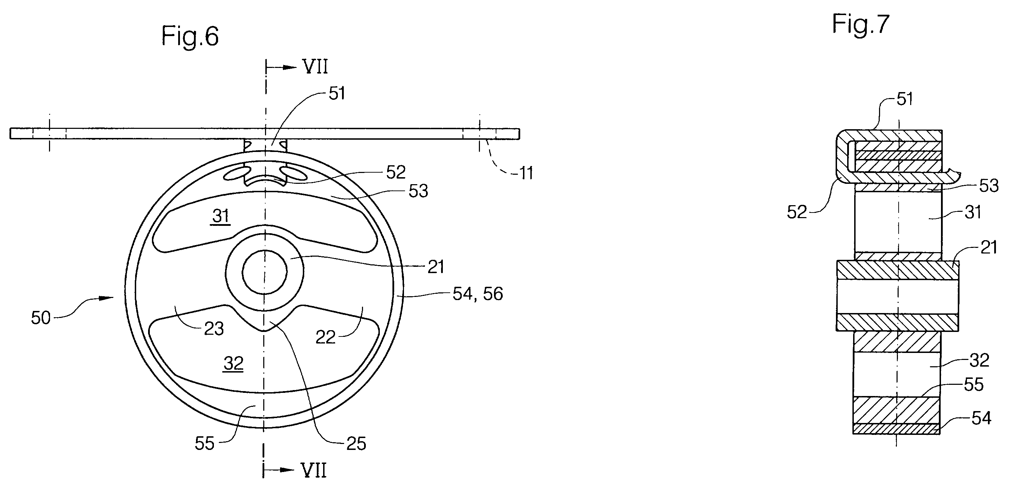

Nach den Fig. 6 und 7 ist eine Aufhängung 50 prinzipiell ähnlich aufgebaut, wie die Aufhängung 2 entsprechend den Fig. 3 bis 5. Gleiche bzw. äquivalente Bauelemente sind daher mit den gleichen Bezugsziffern versehen. Abweichend von der Aufhängeöse 2 ist bei der Aufhängung 50 ein hakenförmiges Montageblech 51 vorgesehen, das mit seinem Haken 52 durch Vulkanisation mit einem etwa kreissegmentförmigen Lagerkörper 53 aus elastischem Werkstoff verbunden ist. Außerdem weist ein Rohrabschnitt 54 aus Stahl eine Kreisform 56 auf. Gegenüberliegend zu dem Nocken 25 ist an dem Rohrabschnitt 54 ein zusätzlicher Puffer 55 vorgesehen.

Die Funktionsweise der Aufhängung 50 entspricht bei den vorkommenden Belastungsfällen der, zu der Aufhängung 2 beschriebenen Funktion.

Anstelle der aus Metall, bzw. Stahl bestehenden Teile, wie Lagerbolzen 15, Hülse 21 und Rohrabschnitt 20 sowie Montageblech 10; 51 mit Haken 52 kommen auch andere Werkstoffe, wie Verbundwerkstoffe, Aluminium-Werkstoffe oder Kunststoffe in Frage.

## Patentansprüche

1. Aufhängung (2) für eine Abgasanlage (1) eines Kraftfahrzeugs, bestehend aus einem, an einem Montageblech (10, 52) befestigten Halteteil (20),
einer über Stege (23, 24) aus gummielastischem Werkstoff gelagerte Hülse (21) zu Befestigung der Abgasanlage (1),
dadurch gekennzeichnet,
daß das Halteteil formstabil und als geschlossener Rohrabschnitt (20, 54) ausgebildet ist,
der Rohrabschnitt (20, 54) durch ein, innerhalb des Rohrabschnitts (20, 54) liegendes spielfreies Gelenk (15, 26) in Längsrichtung (17) des Montageblechs (10, 52) schwenkbar gelagert ist,
und die Hülse (21) mit einem Teil (1) der Abgasanlage (1) verdrehfest verbunden ist.

2. Aufhängung nach Anspruch 1,
dadurch gekennzeichnet,
daß der Rohrabschnitt (20, 54) als Kreis (56), Ellipse, Kreisabschnitt (38) mit gerundetem Giebel (36) oder als Kreis - bzw. ellipsenähnlich ausgebildet ist.

3. Aufhängung nach Anspruch 1,
dadurch gekennzeichnet,
daß das spielfreie Gelenk (15, 26) aus einem, mit dem Montageblech (10) verbundenen Lagerbolzen (15) und einem durch Vulkanisation hergestellten Lagerkörper (26) aus elastischem Werkstoff drehbar verbunden ist.

4. Aufhängung nach Anspruch 3,
dadurch gekennzeichnet,
daß anstelle des Lagerbolzens (15) ein Haken (52) des Montageblechs (51) in dem Lagerkörper (53) einvulkanisiert ist.

5. Aufhängung nach den Ansprüchen 3 oder 4,
dadurch gekennzeichnet,
daß der Lagerbolzen (15) bzw. der Haken (52) umfangseitig vollständig in elastischem Werkstoff eingebettet ist.

6. Aufhängung nach Anspruch 1,
dadurch gekennzeichnet,
daß zu beiden Seiten der Hülse (21) Schubfedern (22, 23) etwa parallel zum Montageblech (10, 51) liegen und
in vertikaler Richtung (40) dazu Freiräume (31, 32) vorgesehen sind.

7. Aufhängung nach Anspruch 6,
dadurch gekennzeichnet,
daß in vertikaler Richtung (40) der Aufhängung (2, 50) elastische Puffer (24, 25) vorgesehen sind, und
die Freiräume (31, 32) für die Pufferwege (33, 34) unterschiedlich groß sind.

8. Aufhängung nach Anspruch 1,
dadurch gekennzeichnet,
daß der Rohrabschnitt (20) umfangsseitig vollständig mit einer elastischen Schicht (30) umgeben ist.
